# EUROPEAN PATENT APPLICATION

(11) **EP 2 775 321 A2**
(43) Date of publication of application: **10.09.2014**
(21) Application number: 14157484.8
(22) Date of filing: 03.03.2014
(51) Int. Cl.: G01V 1/36, G01V 1/30

(54) **Method and device for calculating time-shifts and time-strains in seismic data**

(30) Priority: 04.03.2013 US 201361772228 P
(71) Applicant: CGG Services SA, 91300 Massy (FR)
(72) Inventor: Hoeber, Henning, 91300 Massy (FR)
(74) Representative: Regimbeau

(57) **Abstract**

A method for calculating time-strains for two seismic data sets resulting from seismic exploration of the same subsurface structure uses selected subsets of data from the two seismic data sets to calculate time-shifts for each trace. A smooth function is fitted along each trace based on the calculated time-shifts a time derivative is applied to the smooth function to obtain time-strains along each trace.

## Description

### CROSS REFERENCE TO RELATED APPLICATIONS

This application claims priority and benefit from U.S. Provisional Patent Application No. 61/772,228, filed March 04, 2013, for "Warping With Time-shifts and Strains Thinning Method," the entire content of which is incorporated in its entirety herein by reference.

### BACKGROUND

### TECHNICAL FIELD

Embodiments of the subject matter disclosed herein generally relate to methods and devices used for calculating time-shifts between two sets of seismic data and the time-shifts derivatives known as strains or time-strains, and, more particularly, to calculating the time-shifts on selected subsets of the data and interpolating the calculated time-shifts with a smooth function along each trace before calculating the time-strains.

### DISCUSSION OF THE BACKGROUND

During the past years, interest in marine surveys for identifying and surveying oil and gas production fields has increased. Marine seismic surveys acquire reflection seismology data to generate a profile (image) of the geophysical structure under the seafloor.

Seismic reflection data typically includes traces (i.e., reflected wave signal versus time corresponding to depth) associated with locations. Since receivers are distributed on streamers, the locations are aligned along lines yielding 2D images. However, when plural parallel streamers are used to acquire data, interpolating the 2D images corresponding to each streamer yields 3D images. Therefore, seismic surveys using plural streamers are known as 3D seismic surveys. Although this explanation of the term "3D survey" refers to marine data acquisition using streamers, "3D survey" is a concept pertinent also in the context of marine data acquisition using ocean bottom receivers and land data acquisition.

Recently, the term "4D survey" is used when 3D seismic surveys are repeated over a period of Calendar time in order, for example, to observe changes of reservoirs and adjacent structure depletion during production. A 4D survey enables identifying unswept areas and areas where there are barriers to flow that may not be easily detectable otherwise.

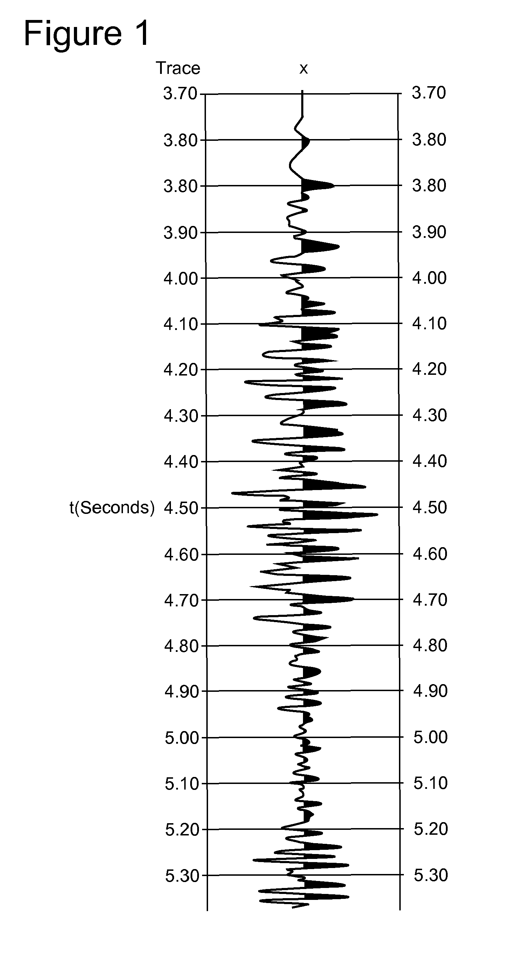

As is well-known in the art, raw seismic data is processed to be converted in a sequence of discrete seismic values versus time. Figure 1 is a graphic representation of a trace, the vertical axis representing time from the shot to the detection (corresponding to depth), and the horizontal axis representing seismic values (e.g., pressure).

One way to analyze differences within data sets of a 4D survey is to calculate time-shifts along corresponding traces in two 3D seismic surveys included in the 4D survey. These time-shifts occur when a seismic wave's propagation speed through one or more different layers of the underground structure changes (it may increase or decrease). The deeper an interface yielding a notable reflection, the more corresponding time-shifts are caused by the cumulative effect of various changes along the trace rather than the local change. Therefore, time derivatives of these time-shifts (known as "time-strains") along the trace are considered to be more relevant.

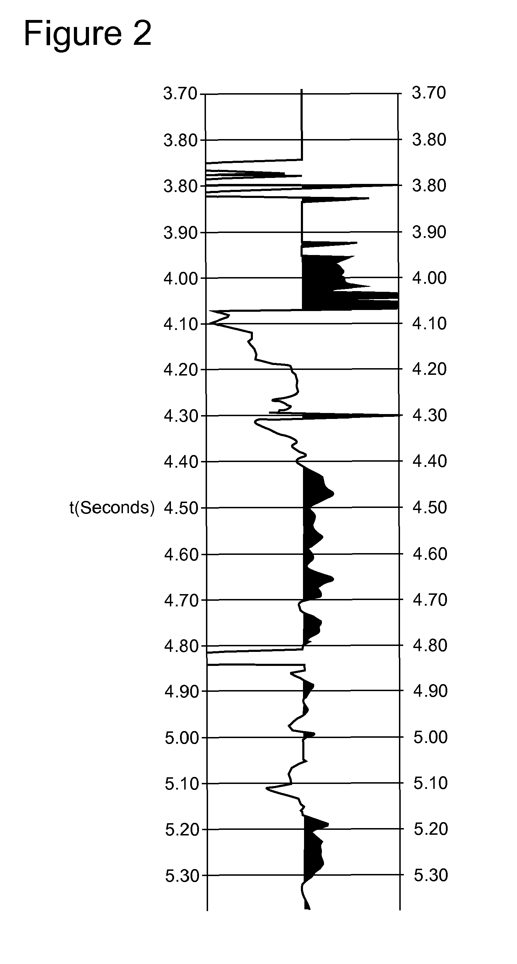

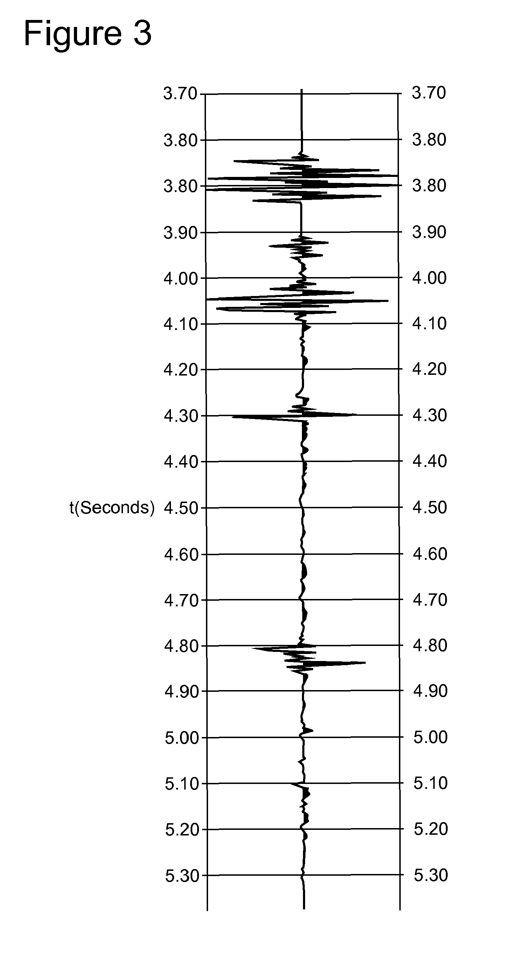

A common method to calculate time-shifts is the use of a continuous time-windowed cross-correlation. Figure 2 illustrates time-shifts along the seismic trace in Figure 1, as conventionally calculated. Figure 3 illustrates time-strains calculated based on the time-shifts in Figure 2. It has been observed that this approach is time-consuming and potentially inaccurate because time-strains include many spurious peaks. Other methods incorporate smoothness constraints so that the noise in the time-strain is reduced. However such constraints are somewhat arbitrary: whilst the time-shifts need to be smooth in order to numerically obtain cleaner time-strains, a more meaningful constraint would be satisfying a criterion that relates to interval consistency.

Accordingly, it would be desirable to provide methods to efficiently and accurately calculate time-strains for two seismic data sets resulting from seismic exploration of the same subsurface structure, while avoiding the afore-described problems and drawbacks.

### SUMMARY

Embodiments described in this documents reduce (i.e., thin, select a subset thereof) initial seismic data sets based on predetermined rules, and calculate time-shifts using only the reduced data sets. Thinning may include statistical calculations on the data and or include prior information such as picked horizons relating to known layer (impedance) changes. The calculated time-shifts are fitted using a smooth function prior to calculating the corresponding time-strains to achieve a more accurate and rapid image of changes between the two data sets.

According to an exemplary embodiment, there is a method for analyzing two seismic data sets resulting from seismic exploration of the same underground structure. The method includes pairing traces included in the two seismic data sets and corresponding to a substantially same location of the explored underground structure. The method further includes selecting subsets of data for each trace of a pair of traces to obtain a pair of thinned traces. The method also includes calculating time-shifts for the pair of thinned traces to investigate the underground structure.

According to another embodiment, there is a method for calculating time-strains for two seismic data sets resulting from seismic exploration of the same subsurface structure. This method includes selecting subsets of data from the two seismic data sets according to a predetermined selection method, calculating time-shifts between the selected subsets of data for traces pertaining to the two seismic data sets and corresponding to the same location, generating smooth functions along the traces based on the calculated time-shifts, and applying a time derivative to the generated smooth functions to obtain time-strains.

According to another embodiment, there is a seismic data processing apparatus having an interface and a data processing unit. The interface is configured to receive two seismic data sets resulting from seismic exploration of the same subsurface structure. The data processing unit is configured to select subsets of data from the two seismic data sets according to a predetermined selection method, to calculate time-shifts between the selected subsets of data for each trace, to generate smooth functions along traces based on the calculated time-shifts, and to apply a time derivative to the generated smooth functions to obtain time-strains.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is an illustration of a seismic trace;
Figure 2 is a graph illustrating time-shifts along the trace in Figure 1, calculated using a conventional method;
Figure 3 is a graph illustrating time-strains along the trace in Figure 1, calculated using a conventional method;
Figure 4 is a flowchart of a method for calculating time-strains based on two seismic data sets, according to an embodiment;
Figure 5 is a graph illustrating a subset of selected data corresponding to the trace in Figure 1, according to an embodiment;
Figure 6 is a graph illustrating time-shifts calculated for the selected data in Figure 5, according to an embodiment;
Figure 7 is a graph illustrating a B-spline fitted through the time-shifts in Figure 6, according to an embodiment;
Figure 8 is a graph illustrating time-strains calculated by applying a derivative method to the fitted B-spline in Figure 7, according to an embodiment;
Figure 9 is a graph illustrating another subset of selected data corresponding to the trace in Figure 1, according to another embodiment;
Figure 10 is a graph illustrating time-shifts calculated for the selected data in Figure 9, according to another embodiment;
Figure 11 is a graph illustrating a B-spline fitted through the time-shifts in Figure 10, according to another embodiment;
Figure 12 is a graph illustrating time-strains calculated by applying a derivative method to the fitted B-spline in Figure 11, according to an embodiment;
Figure 13 is a flowchart illustrating steps performed by a method for calculating time-strains for two seismic data sets resulting from seismic exploration of the same subsurface structure, according to an embodiment; and
Figure 14 is a schematic diagram of a seismic data processing apparatus, according to an embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology used in seismic data processing.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

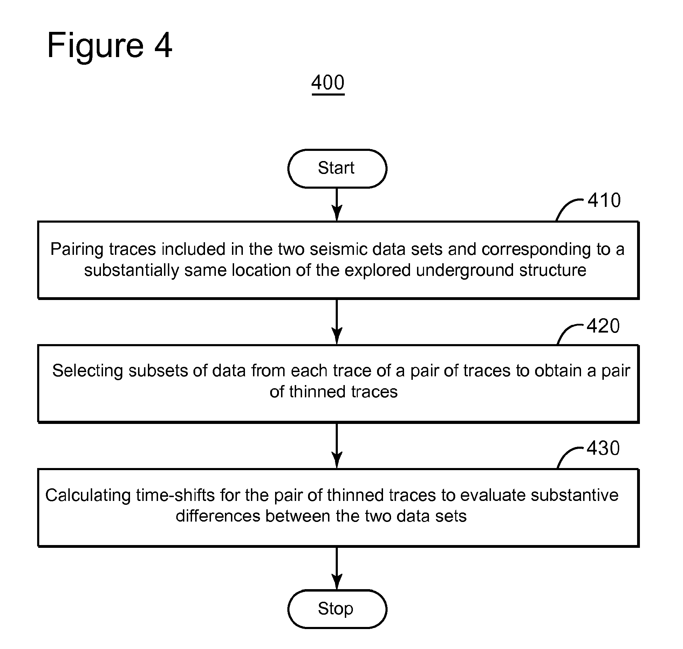

Figure 4 is a flowchart of a method 400 for analyzing two seismic data sets resulting from seismic exploration of the same underground structure. Method 400 includes pairing traces included in the two seismic data sets and corresponding to a substantially same location of the explored underground structure, at 410. Unlike the conventional approach in which all data along the trace is used to calculate the time shifts, at 420, subsets of data for each trace of a pair of traces are selected to obtain a pair of thinned traces. Then, time-shifts are calculated for the pair of thinned traces at 430. The calculated time-shifts enable identifying substantive differences between the two data sets. Selecting subsets of data improve likelihood that the differences represent mainly information indicating real physical changes in the underground structure.

The two seismic data sets may be vintages of time-lapsed data (i.e., 4D survey data). However, the method may be applied to other pairs of data that one may align in time. For example, the two seismic data sets may correspond to longitudinal and transversal reflections of transverse waves (known as PP and PS data). In another example, the two seismic data sets may correspond to sets of data acquired with different offsets from a source (e.g., a seismic data set corresponding to Offset 1 and a seismic data set corresponding to Offset 2).

The two seismic data sets may be any form of stack data, such as full stack, or any sub-angle stack. The two seismic data sets may also be singular offset data.

The selection of points on which to calculate the time-shifts (the thinning) may be performed on one data (such as the stack) and these locations may then be propagated to other data such as sub-stacks or all offsets (pre-stack data).

The operation of selecting subsets of data is performed according to various skeleton-picking methods. For example, in one embodiment, the skeleton-picking method selects local maxima of the detected seismic values along each trace. In another embodiment, the skeleton-picking method selects local minima of the detected seismic values along each trace. In yet another embodiment, the skeleton-picking method uses energy functions to take into consideration side lobes by picking peaks only on the Hilbert transform of the data. In yet another embodiment, the skeleton-picking method selects the largest local absolute values among the detected seismic values along each trace (in other words, both local minima and local maxima). In another embodiment, the skeleton-picking method selects a percentage of local peaks in order of magnitude. In another embodiment, the skeleton-picking method selects a peak if a predetermined percentage of neighbor traces have peaks at adjacent times. In yet another embodiment, the skeleton-picking method selects peaks in a monitor data set among the two vintages in bins around a selected peak in a base data set. Those skilled in the art would recognize that other skeleton picking methods may be used.

The time-shifts may be calculated using any time-shift calculating techniques, such as cross-correlation, Taylor expansion based least squares methods, non-linear inversion methods or any other method.

The calculated time shifts may then be subject to spatial smoothing to achieve smoothness of the time-shifts along the traces and in a horizontal plane using adjacent traces. Local smoothness across traces may be sought before achieving smoothness along traces.

B-splines may then be fitted to achieve a smooth variation of the time shifts along the traces. The B-splines are preferred because they are stable and smooth functions therefore giving smooth time-shift derivatives, i.e., smooth time-strains.

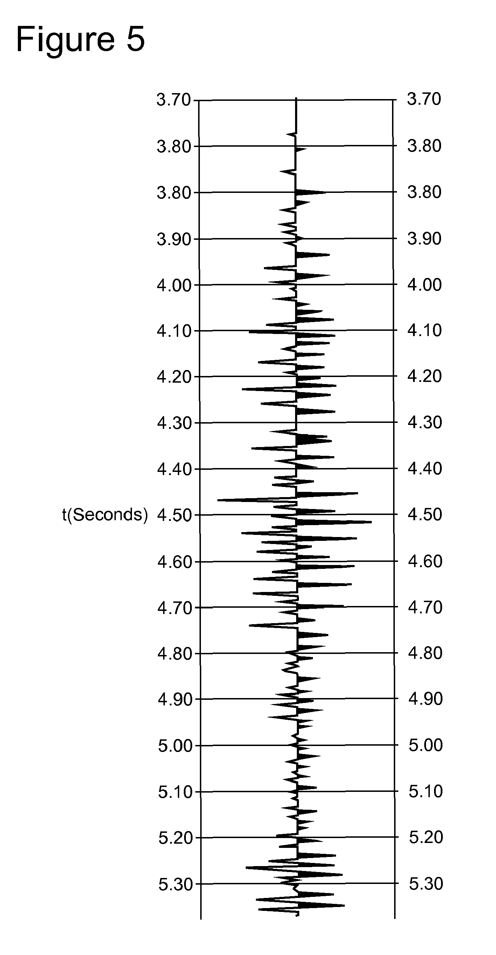

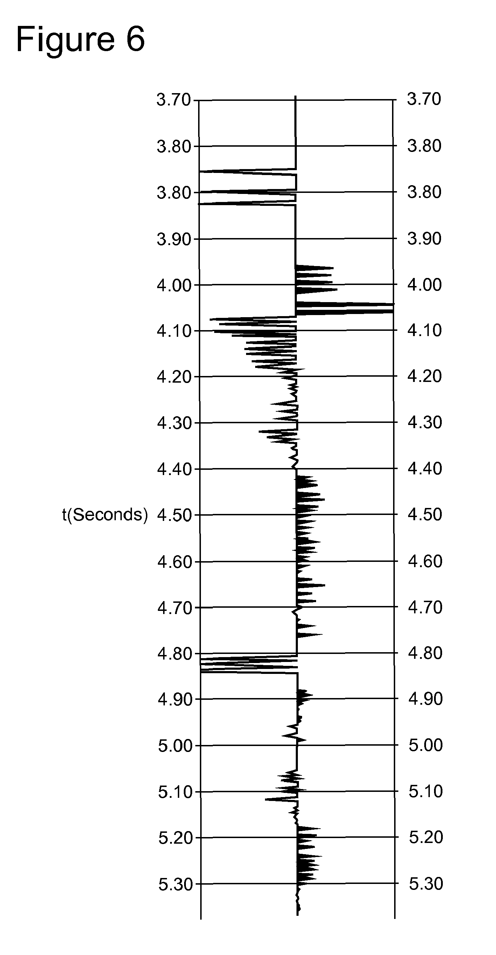

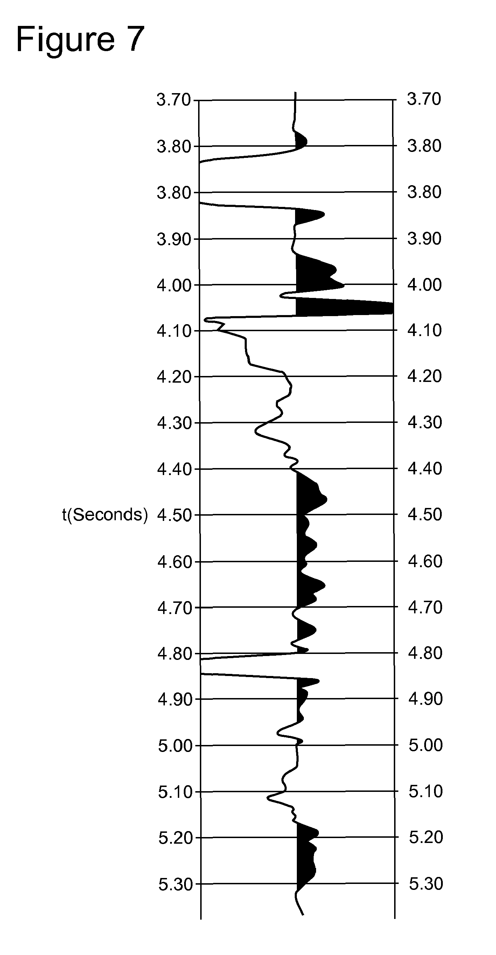

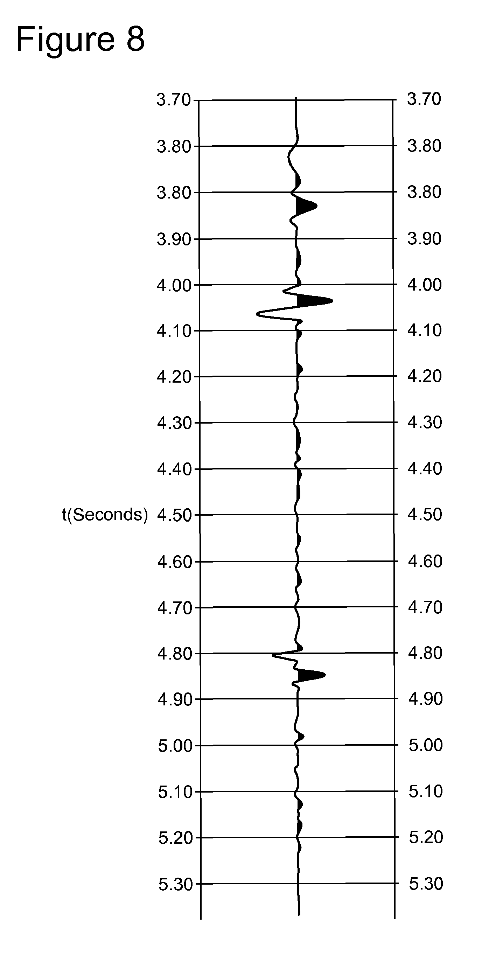

Figure 5 is a graph illustrating a subset of selected data corresponding to the trace in Figure 1, the subset of data being selected using one of the skeleton-picking methods previously discussed, e.g., the data selected here are the local minima and maxima. Figure 6 is a graph illustrating time-shifts calculated for the selected data in Figure 5. Figure 7 is a graph illustrating a B-spline fitted through the time-shifts in Figure 6 and Figure 8 is a graph illustrating time-strains calculated by applying a derivative method to the fitted B-spline in Figure 7.

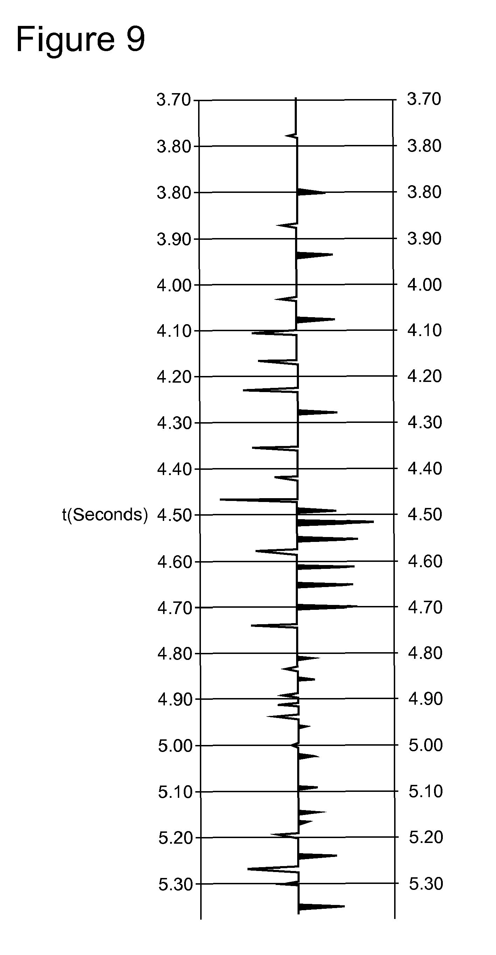

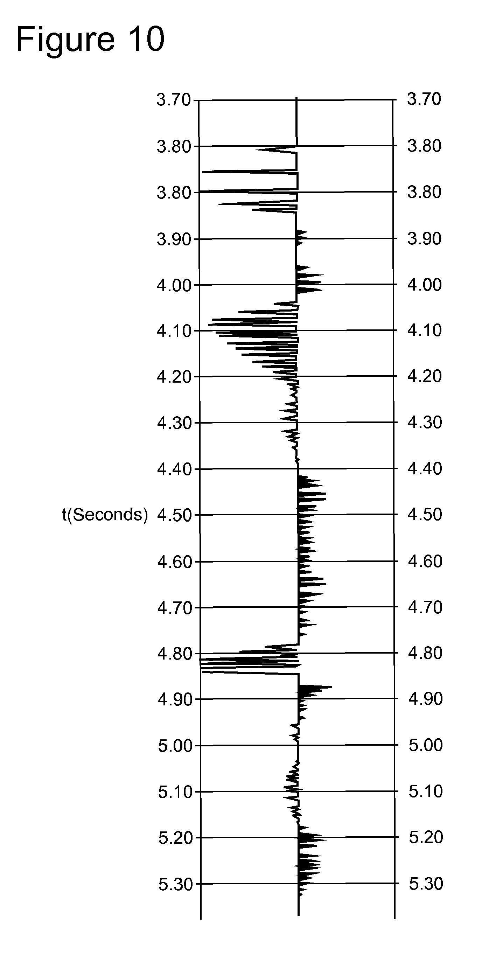

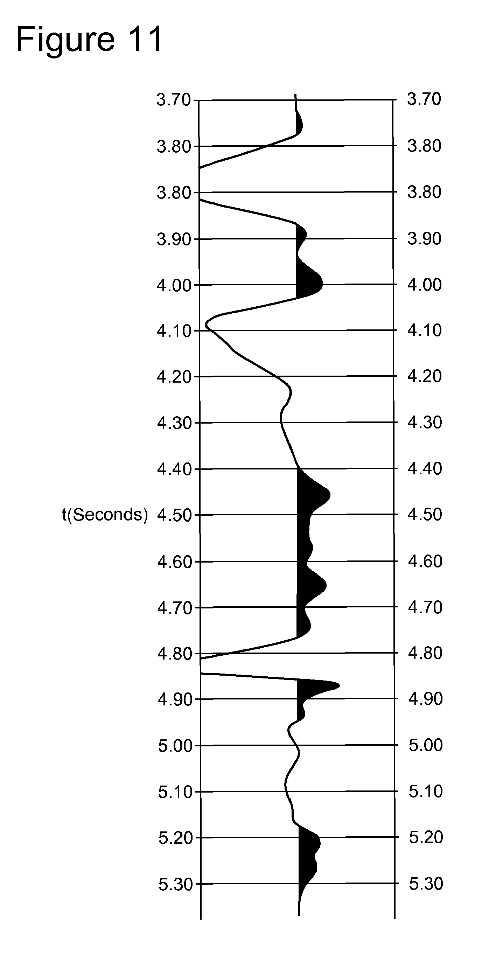

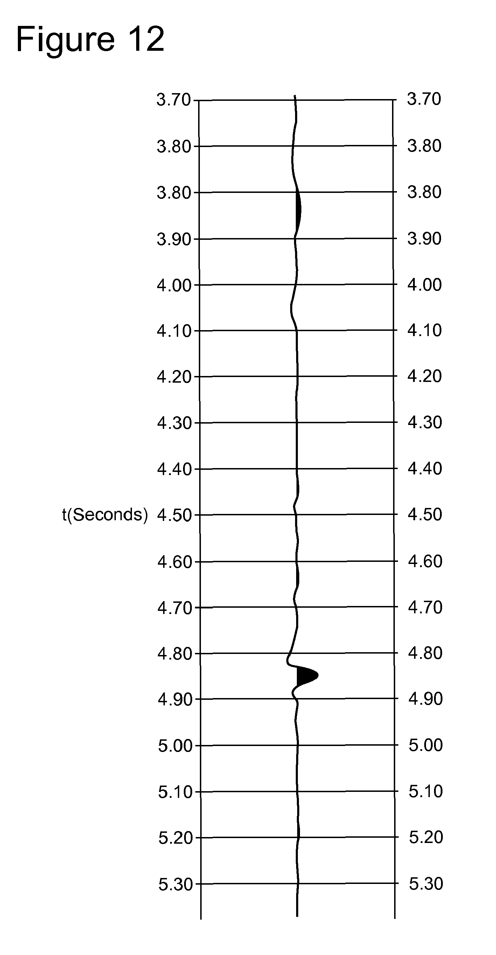

Figure 9 is a graph illustrating another subset of selected data corresponding to the trace in Figure 1, this other subset of data being selected using another skeleton-picking method to include only the local maxima (i.e., the other subset is only a part of the data in Figure 5). Figure 10 is a graph illustrating time-shifts calculated for the selected data in Figure 9. Figure 11 is a graph illustrating a B-spline fitted through the time-shifts in Figure 10, and Figure 12 is a graph illustrating time-strains calculated by applying a derivative method to the fitted B-spline in Figure 11.

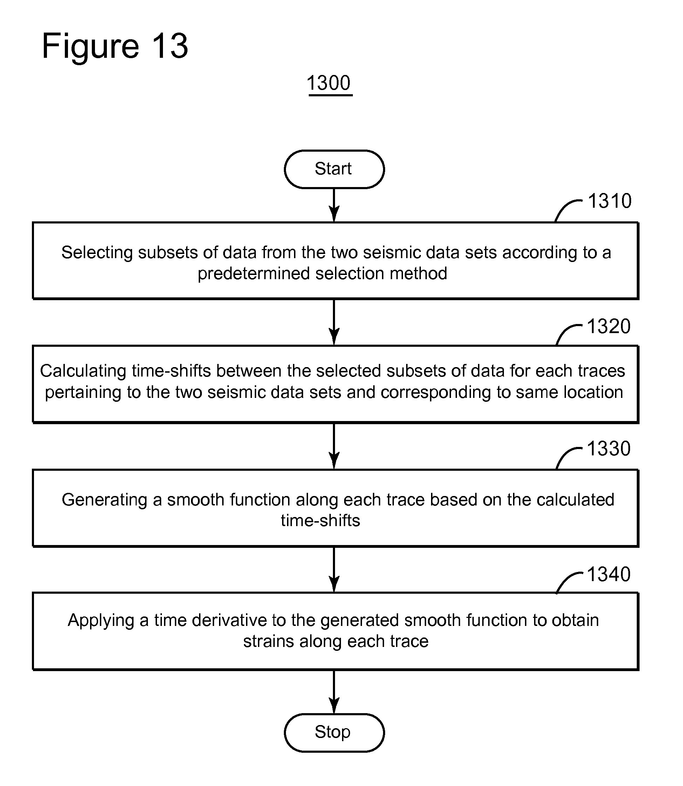

Figure 13 is a flowchart of a method 1300 for calculating time-strains for two seismic data sets resulting from seismic exploration of the same subsurface structure. Method 1300 includes selecting subsets of data from the two seismic data sets according to a predetermined selection method, at 1310. The predetermined selection method may be any of the above-described skeleton picking methods. In one embodiment, the predetermined selection method includes selecting data corresponding to times along each seismic trace at which a signal-to-noise ratio is larger than a predetermined value. In another embodiment, the predetermined selection method includes selecting data corresponding to times along each seismic trace at which the relative change in seismic wave propagation velocity exceeds a predetermined threshold. In yet another embodiment, the predetermined selection method used to select the subsets of data is performed based on one or more parameters controlling a manner in which one or more predetermined rules are applied to pick data along traces. For example, the subsets of data include only a predetermined percentage (the larger) of the local peaks (maxima or minima). In another example, the subsets of data include only local peaks for which a predetermined percentage of the neighbor traces have a peak at adjacent times.

Method 1300 further includes calculating time-shifts between the selected subsets of data for traces pertaining to the two seismic data sets and corresponding to same location, at 1320. The time-shifts may be calculated using cross-correlation of time windows sliding along corresponding seismic tracks that include only the selected subsets of data or other previously-specified methods. Method 1300 then includes generating smooth functions along the traces based on the calculated time-shifts, at 1330. The smooth function may be a B-spline or other smooth function). Method 1300 finally includes applying a time derivative to the generated smooth functions to obtain time-strains, at 1340.

In one embodiment, method 1300 may also include applying spatial smoothing operators to achieve smoothness of the time-shifts in a horizontal plane using adjacent traces, before generating the smooth functions along the traces.

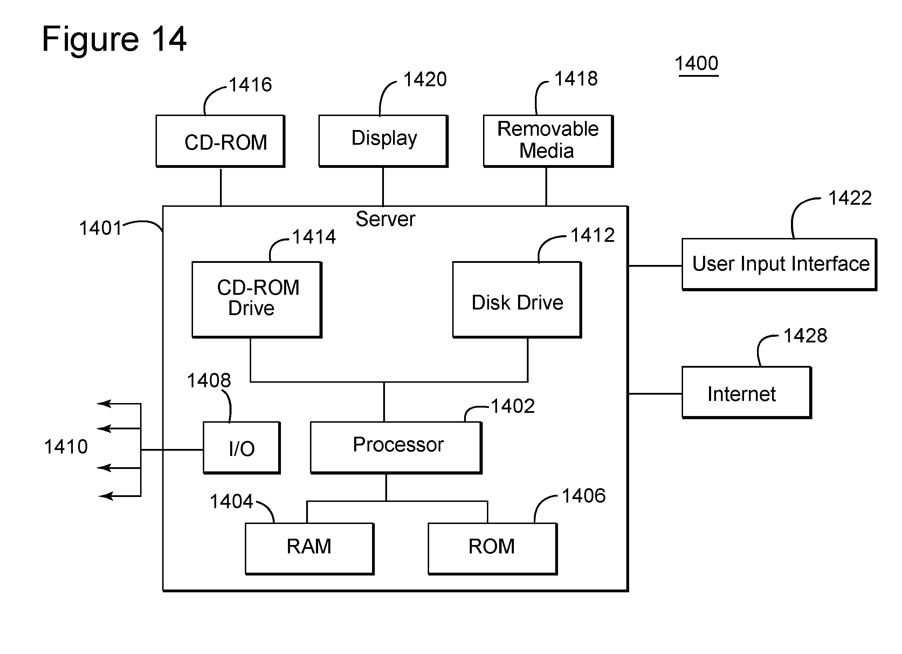

Figure 14 is a schematic diagram of a seismic data processing apparatus 1400 according to an embodiment. Apparatus 1400 is configured to perform the methods according to various above-discussed embodiments. Hardware, firmware, software or a combination thereof may be used to perform the various steps and operations. Apparatus 1400 may include server 1401 having a data processing unit (processor) 1402 coupled to a random access memory (RAM) 1404 and to a read-only memory (ROM) 1406. ROM 1406 may also be other types of storage media to store programs, such as programmable ROM (PROM), erasable PROM (EPROM), etc. Methods according to various embodiments described in this section may be implemented as computer programs (i.e., executable codes) non-transitorily stored on RAM 1404 or ROM 1406.

Processor 1402 may communicate with other internal and external components through input/output (I/O) circuitry 1408 and bussing 1410. The I/O circuitry is configured to receive two seismic data sets resulting from seismic exploration of the same subsurface structure. Processor 1402 carries out a variety of functions as are known in the art, as dictated by software and/or firmware instructions.

Processor 1402 is configured to select subsets of data from the two seismic data sets according to a predetermined selection method and to calculate time-shifts between the selected subsets of data for each trace. Processor 1402 is further configured to generate smooth functions along traces based on the calculated time-shifts, and to apply a time derivative to the generated smooth functions to obtain time-strains.

Server 1401 may also include one or more data storage devices, including disk drives 1412, CD-ROM drives 1414, and other hardware capable of reading and/or storing information, such as a DVD, etc. The two seismic data sets, the time-shifts and/or the time-strains may be stored on such computer readable data storage components. In one embodiment, software for carrying out the above-discussed methods may be stored on a CD-ROM 1416, removable media 1418 or other forms of media capable of storing information. The storage media may be inserted into, and read by, devices such as the CD-ROM drive 1414, disk drive 1412, etc. Server 1401 may be coupled to a display 1420, which may be any type of known display or presentation screen, such as LCD, plasma displays, cathode ray tubes (CRT), etc. Server 1401 may control display 1420 to exhibit images of the explored subsurface structure generated using first and/or second seismic data. A user input interface 1422 may include one or more user interface mechanisms such as a mouse, keyboard, microphone, touch pad, touch screen, voice-recognition system, etc.

Server 1401 may be coupled to other computing devices, such as the equipment of a vessel, via a network. The server may be part of a larger network configuration as in a global area network such as the Internet 1428, which allows ultimate connection to the various landline and/or mobile client/watcher devices.

The disclosed embodiments provide methods for calculating time-strains using subsets of two seismic data sets resulting from seismic exploration of the same subsurface structure. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in particular combinations, each feature or element can be used alone without the other features and elements of the embodiments, or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method (400) for analyzing two seismic data sets resulting from seismic exploration of the same underground structure, the method comprising:
pairing (410) traces included in the two seismic data sets and corresponding to a substantially same location of the explored underground structure;
selecting (420) subsets of data for each trace of a pair of traces to obtain a pair of thinned traces; and
calculating (430) time-shifts for the pair of thinned traces to evaluate substantive differences between the two data sets.

2. The method of claim 1, wherein local maxima and/or local minima among detected seismic values along each trace of the pair of traces are selected in the subsets of data.

3. The method of claim 1, wherein energy functions are used to select the subsets of data.

4. The method of claim 1, wherein the subsets of data include a predetermined percentage of local peaks that are larger than other local peaks that are not included in the subsets of data.

5. The method of claim 1, wherein a seismic value is selected in the subsets of data, if a predetermined percentage of neighbor traces have peaks within a time window around a time corresponding to the seismic value.

6. The method of claim 1, wherein if a peak is selected along one trace of the pair, peaks along the other trace of the pair within a predetermined distance from the peak are also selected.

7. The method of claim 1, wherein the subsets of data are selected such that signal to noise ratio to be larger than a predetermined threshold.

8. The method of claim 1, further comprising:
applying a time derivative to the time-shifts to obtain time-strains along the traces.

9. The method of claim 8, further comprising:
generating smooth functions along the traces based on the calculated time-shifts, wherein the time derivative is applied to the smooth functions to obtain the time-strains.

10. The method of claim 9, further comprising:
applying spatial smoothing operators to achieve smoothness of the time-shifts in a horizontal plane using adjacent pairs of traces before generating the smooth functions along the traces.

11. The method of claim 9, wherein the smooth function is a B-spline.

12. The method of claim 1, wherein the two seismic data sets are time-lapse vintages, PP data and PS data, or data acquired with different offsets.

13. The method of claim 1, wherein the time-shifts are calculated using cross-correlation of time windows sliding along the thinned traces.

14. A method (1300) for calculating time-strains for two seismic data sets resulting from seismic exploration of the same subsurface structure, the method comprising:
selecting (1310) subsets of data from the two seismic data sets according to a predetermined selection method;
calculating (1320) time-shifts between the selected subsets of data for traces pertaining to the two seismic data sets and corresponding to same location;
generating (1330) smooth functions along the traces based on the calculated time-shifts; and
applying (1340) a time derivative to the generated smooth functions to obtain time-strains.

15. A seismic data processing apparatus (1400), comprising:
an interface (1408) configured to receive two seismic data sets resulting from seismic exploration of the same subsurface structure; and
a data processing unit configured
to select subsets of data from the two seismic data sets according to a predetermined selection method;
to calculate time-shifts between the selected subsets of data for each trace;
to generate smooth functions along traces based on the calculated time-shifts; and
to apply a time derivative to the generated smooth functions to obtain time-strains.
